# EUROPÄISCHE PATENTSCHRIFT

(11) **EP 3 812 966 B1**
(45) Veröffentlichungstag und Bekanntmachung des Hinweises auf die Patenterteilung: **22.04.2026**
(21) Anmeldenummer: 19204989.8
(22) Anmeldetag: 24.10.2019
(51) Int. Cl.: G06F 18/40

(54) **COMPUTERIMPLEMENTIERTES VERFAHREN UND SYSTEM ZUM ZUORDNEN EINES NUMERISCHEN WERTS ZU EINER ANNOTATION EINES OBJEKTS**
COMPUTER-IMPLEMENTED METHOD AND SYSTEM FOR ALLOCATING A NUMERIC VALUE TO AN ANNOTATION OF AN OBJECT
PROCÉDÉ ET SYSTÈME MIS EN UVRE PAR ORDINATEUR PERMETTANT D'ATTRIBUER UNE VALEUR NUMÉRIQUE À UNE ANNOTATION D'UN OBJET

(43) Veröffentlichungstag der Anmeldung: 28.04.2021
(73) Patentinhaber: dSPACE SE & Co. KG, 33102 Paderborn (DE)
(72) Erfinder: Rödler, Daniel, 76133 Karlsruhe (DE); Rinke, Stefan, 76133 Karlsruhe (DE)

(56) Entgegenhaltungen:
- MANIKANDAN N S ET AL: "Deep Learning Based Automatic Video Annotation Tool for Self-Driving Car", ARXIV.ORG, CORNELL UNIVERSITY LIBRARY, 201 OLIN LIBRARY CORNELL UNIVERSITY ITHACA, NY 14853, 19 April 2019 (2019-04-19), XP081268461
- COROVIC ALEKSA ET AL: "The Real-Time Detection of Traffic Participants Using YOLO Algorithm", 2018 26TH TELECOMMUNICATIONS FORUM (TELFOR), IEEE, 20 November 2018 (2018-11-20), pages 1 - 4, XP033499200, [retrieved on 20190114], DOI: 10.1109/TELFOR.2018.8611986
- JOSEPH REDMON ET AL: "You Only Look Once: Unified, Real-Time Object Detection", 9 May 2016 (2016-05-09), pages 1 - 10, XP055556774, Retrieved from the Internet <URL:https://arxiv.org/pdf/1506.02640.pdf> [retrieved on 20190214], DOI: 10.1109/CVPR.2016.91

## Beschreibung

Die vorliegende Erfindung betrifft ein computerimplementiertes Verfahren zum Zuordnen eines numerischen Werts zu einer Annotation zumindest eines in Bild-, Video- und/oder Punktwolkendaten identifizierten Objekts.

Die vorliegende Erfindung betrifft des Weiteren ein System zum Zuordnen eines numerischen Werts zu einer Annotation zumindest eines in Bild-, Video- und/oder Punktwolkendaten identifizierten Objekts.

Die vorliegende Erfindung betrifft überdies ein Computerprogramm.

### Stand der Technik

Computer-Vision-Modelle, d.h. Algorithmen zur Objekterkennung in Bild-, Video- und/oder Punktwolkendaten, werden anhand von Trainingsdaten angelernt. Um Objekte in den Bild-, Video- und/oder Punktwolkendaten zuverlässig erkennen zu können, werden die betreffenden Objekte herkömmlicherweise visuell und/oder begrifflich annotiert.

Die Klassifizierung der vorstehend genannten Objekte wird herkömmlicherweise von Annotierern manuell unter Verwendung geeigneter Softwaretools durchgeführt. Im Bereich von Computer-Vision-Modellen für das autonome Fahren erfolgt die Bildannotation in der Regel mit sogenannten Bounding-Boxen. Hiermit können beispielsweise Fahrzeuge, Verkehrszeichen und weitere Umgebungsobjekte markiert bzw. annotiert werden.

Die CVPR-Veröffentlichung der Computer Vision Foundation, betitelt "Interactive full image segmentation by considering all regions jointly" offenbart eine Softwareapplikation, welche bei einer Annotierung von Extrempunkten bestimmter Bildobjekte eine Vorhersage für eine Vollbildsegmentierung, d.h. eine Unterteilung des Vollbilds in die darin enthaltenen Objekte, ermöglicht.

Die Softwareapplikation weist überdies das Merkmal auf, dass bei einer fehlerhaften Vorhersage bestimmter Bereiche der Bildsegmentation der Annotierer mit einem graphischen Benutzerwerkzeug Änderungen an der Bildsegmentierung vornehmen kann, welche anschließend von der Softwareapplikation umgesetzt werden können.

Weitere Verfahren zum automatischen Identifizieren und Annotieren von Objekten in empfangenen Bild-, Video- und/oder Punktwolkendaten sind aus den folgenden Papers bekannt:
N.S. Manikandan, K. Ganesan, "Deep Learning based Automatic Video Annotation Tool for Self-Driving Car", arXiv:1904.12618v1[cs.CV],Cornell University, 19.04.2019. Aleksa Corovic et al. "The Real-Time Detection of Traffic Participants Using YOLO Algorithm", 26th Telecommunication Forum (TELFOR), IEEE, Belgrade, Serbia, 20.11.2018.
Joseph Redmon et al., "You Only Look Once: Unified, Real-Time Object Detection", arXiv:1506.02640v5[cs.CV], Cornell University, 09.05.2016.

Die vorstehend genannten Verfahren haben jedoch gemeinsam, dass stets ein hoher Annotationsaufwand vorhanden ist, da zum effektiven Training der Computer-Vision-Modelle eine sehr große Menge an Trainingsdaten und deren Annotierung erforderlich ist, was einen hohen personellen und kostenseitigen Aufwand zur Folge hat.

Demzufolge besteht ein Bedarf, bestehende Verfahren und Systeme zur Annotation von Objekten in Bild-, Video- und/oder Punktwolkendaten dahingehend zu verbessern, dass eine vereinfachte, effizientere und kostengünstigere Annotierung von spezifizierten Objekten ermöglicht wird. Es ist daher Aufgabe der Erfindung, ein computerimplementiertes Verfahren, ein System und ein Computerprogramm anzugeben, welches eine vereinfachte, effizientere und kostengünstigere Annotierung von spezifizierten Objekten in Bild-, Video- und/oder Punktwolkendaten ermöglicht.

### Offenbarung der Erfindung

Die Aufgabe wird erfindungsgemäß gelöst durch ein Computerimplementiertes Verfahren zum Zuordnen eines numerischen Werts zu einer Annotation zumindest eines in Bild-, Video- und/oder Punktwolkendaten identifizierten Objekts nach Patentanspruch 1, ein System zum Zuordnen eines numerischen Werts zu einer Annotation zumindest eines in Bild-, Video- und/oder Punktwolkendaten identifizierten Objekts nach Patentanspruch 11 und ein Computerprogramm nach Patentanspruch 12.

Die Erfindung betrifft ein Computerimplementiertes Verfahren zum Zuordnen eines numerischen Werts zu einer Annotation zumindest eines in Bild-, Video- und/oder Punktwolkendaten identifizierten Objekts.

Das Verfahren umfasst ein Identifizieren und Annotieren des zumindest einen Objekts in empfangenen Bild-, Video- und/oder Punktwolkendaten, wobei das Identifizieren und/oder Annotieren zumindest teilweise automatisch durchgeführt wird.

Das Verfahren umfasst ferner ein Berechnen des numerischen Werts der Annotation des zumindest einen Objekts, wobei der numerische Wert zumindest teilweise in Abhängigkeit eines Grads der Übereinstimmung einer Abmessung einer visuellen Annotation in Relation zu einer Abmessung des zumindest einen Objekts und/oder einer Übereinstimmung einer begrifflichen Kennzeichnung des zumindest einen Objekts mit dem zumindest einen Objekt.

Das Verfahren umfasst des Weiteren ein Zuordnen des berechneten numerischen Werts zu dem zumindest einen Objekt.

Die Erfindung betrifft des Weiteren ein System zum Zuordnen eines numerischen Werts zu einer Annotation zumindest eines in Bild-, Video- und/oder Punktwolkendaten identifizierten Objekts.

Das System umfasst Mittel zum Identifizieren und Annotieren des zumindest einen Objekts in empfangenen Bild-, Video- und/oder Punktwolkendaten, wobei das Identifizieren und/oder Annotieren zumindest teilweise automatisch durchführbar ist.

Das System umfasst ferner Mittel zum Berechnen des numerischen Werts der Annotation des zumindest einen Objekts, wobei der numerische Wert zumindest teilweise in Abhängigkeit eines Grads der Übereinstimmung einer Abmessung einer visuellen Annotation in Relation zu einer Abmessung des zumindest einen Objekts und/oder einer Übereinstimmung einer begrifflichen Kennzeichnung des zumindest einen Objekts mit dem zumindest einen Objekt.

Das System umfasst überdies Mittel zum Zuordnen des berechneten numerischen Werts zu dem zumindest einen Objekt.

Die Erfindung betrifft ferner ein Computerprogramm mit Programmcode, um das erfindungsgemäße Verfahren durchzuführen, wenn das Computerprogramm auf einem Computer ausgeführt wird.

Eine Idee der vorliegenden Erfindung ist es, zum einen, eine zumindest teilweise automatische Identifizierung und Annotierung von Objekten in Bild-, Video- und/oder Punktwolkendaten zu ermöglichen. Hierdurch kann ein erheblicher Zeit- und Bearbeitungsaufwand der bisher, gerade im Bereich von Computer-Vision-Modellen für das autonome Verfahren, manuell durchgeführten Tätigkeiten eingespart werden.

Eine Idee der vorliegenden Erfindung ist es zum anderen, im Gegensatz zu im Bereich des Cloud Computing üblichen Pay-per-Use-Abrechnungsmodellen eine Abrechnung bzw. Bepreisung in Abhängigkeit eines Erreichens vorgegebener technischer Parameter, nämlich in Abhängigkeit einer Genauigkeit einer visuellen Annotation und/oder einer korrekten Zuweisung zumindest einer begrifflichen Annotation zu berechnen.

Weitere Ausführungsformen der vorliegenden Erfindung sind Gegenstand der weiteren Unteransprüche und der nachfolgenden Beschreibung unter Bezugnahme auf die Figuren.

Das Verfahren umfasst ferner, dass die begriffliche Kennzeichnung des zumindest einen Objekts zumindest eine Eigenschaft des Objekts umfasst.

Hierdurch kann zusätzlich zu der visuellen Annotation eine genauere Klassifikation des betreffenden Objekts im Rahmen der Zuweisung einer oder einer Mehrzahl von Eigenschaften des Objekts ermöglicht werden.

Gemäß einem weiteren Aspekt der Erfindung umfasst das Verfahren darüber hinaus, dass das visuelle Annotieren ein automatisches Positionieren und Zeichnen eines das Objekt umgebenden Begrenzungselements umfasst, welches durch einen 2D-Begrenzungsrahmen oder, insbesondere bei LiDAR- und/oder Radarbilddaten, durch einen 3D-Begrenzungsrahmen ausgebildet ist.

Aufgrund der automatischen Positionierung und Zeichnung des entsprechenden Begrenzungsrahmens um das betreffende Objekt kann eine präzise und effiziente, d.h. bearbeitungszeitverkürzte, Annotation der in den Bild-, Video- und/oder Punktwolkendaten enthaltenen Objekte durchgeführt werden.

Gemäß einem weiteren Aspekt der Erfindung umfasst das Verfahren ferner, dass die dem Objekt zugewiesene zumindest eine Eigenschaft zumindest eine Objektklasse aufweist, wobei eine erste Objektklasse Kraftfahrzeuge und eine erste Objektunterklasse Personenkraftwagen, Lastkraftwagen, Lieferwagen, Busse, Baustellenfahrzeuge Schienenfahrzeuge und/oder Anhängevorrichtungen aufweisen, und wobei eine zweite Objektklasse Personen und eine zweite Objektunterklasse ein Geschlecht, eine Größe und/oder ein Alter der Person aufweisen.

Darüber hinaus können ebenfalls andere für das betreffende Computer-Vision-Modell relevante Objekte wie beispielsweise Verkehrszeichen, Gebäude etc. klassifiziert werden. Durch die Klassifizierung der Objekte in Objektklassen und Objektunterklassen kann zum einen eine exakte Klassifizierung der betreffenden Objekte als auch eine Vorhersage für ein zu erwartendes Verhalten des Objekts getroffen werden.

Gemäß einem weiteren Aspekt der Erfindung weist das Verfahren ferner den Schritt auf, dass dem die Bild-, Video- und/oder Punktwolkendaten erfassenden Sensor zumindest eine Eigenschaft zugewiesen wird, wobei die zugewiesene Eigenschaft zumindest eine Sensorklasse aufweist, wobei eine erste Sensorklasse einen Bildsensor und eine erste Sensorunterklasse eine Position und Ausrichtung des Bildsensors an einer Trägervorrichtung, insbesondere an einem Erfassungsfahrzeug aufweisen, und wobei eine zweite Sensorklasse einen LiDARsensor und eine dritte Sensorklasse einen Radarsensor aufweist.

Aufgrund der Kenntnis der Position und Ausrichtung des Bildsensors relativ zu dem erfassten Objekt kann somit in vorteilhafter Weise ebenfalls eine genauere Klassifizierung des Objekts ermöglicht werden.

Gemäß einem weiteren Aspekt der Erfindung umfasst das Verfahren ferner, dass die erste Sensorunterklasse eine an der Trägervorrichtung, insbesondere am Erfassungsfahrzeug vorne mittig angeordnete Weitwinkelkamera, eine vorne mittig angeordnete Schmalwinkelkamera, eine vorne links angeordnete Kamera, eine vorne rechts angeordnete Kamera, eine hinten links angeordnete Kamera, eine hinten rechts angeordnete Kamera und/oder eine hinten mittig angeordnete Weitwinkelkamera aufweist.

Somit ist in vorteilhafter Weise eine 360°-Erfassung der umgebenden Verkehrssituation einschließlich sich bewegender und stationärer Objekte möglich.

Gemäß einem weiteren Aspekt der Erfindung umfasst das Verfahren darüber hinaus, dass das Identifizieren und das visuelle Annotieren des zumindest einen Objekts in den Bild-, Video- und/oder Punktwolkendaten manuell, insbesondere durch einen Benutzer, durchgeführt wird, und wobei das Zuweisen der zumindest einen Eigenschaft des Objekts und/oder das Zuweisen der zumindest einen Eigenschaft des das zumindest eine Objekt erfassenden zumindest einen Sensors automatisch durchgeführt wird.

Das erfindungsgemäße Verfahren kann somit in vorteilhafter Weise ebenfalls dann Anwendung finden, wenn der Schritt des Identifizierens und des visuellen Annotierens des zumindest einen Objekts in den Bild-, Video- und/oder Punktwolkendaten manuell durch einen Benutzer durchgeführt wird und darauf aufbauend ein automatisches Zuweisen von Eigenschaften zu dem Objekt und/oder ein automatisches Bezeichnen des die Bild-, Video- und/oder Punktwolkendaten erfassenden Sensors erfolgt.

Erfindungsgemäß umfasst das Verfahren ferner, dass der Grad der Übereinstimmung der Abmessung der visuellen Annotation in Relation zu der Abmessung des zumindest einen Objekts und/oder die Übereinstimmung der begrifflichen Kennzeichnung des zumindest einen Objekts mit dem zumindest einen Objekt durch einen Benutzer überprüft wird.

Somit kann in vorteilhafter Weise eine höchstmögliche Genauigkeit der visuellen Annotation und/oder eine Korrektheit der begrifflichen Annotation ermöglicht werden. Bei hoher Effizienz bzw. Wirksamkeit des computerimplementierten Verfahrens der automatischen visuellen und begrifflichen Annotation ist somit ein nur relativ geringer Zusatzaufwand durch eine Nachbearbeitung des Benutzers vorhanden.

Gemäß einem weiteren Aspekt der Erfindung umfasst das Verfahren darüber hinaus, dass der Grad der Übereinstimmung der Abmessung der visuellen Annotation in Relation zu der Abmessung des zumindest einen Objekts als ausreichend bewertet wird, falls die Abmessung des Begrenzungselements im Wesentlichen der Abmessung, insbesondere der Außenabmessung, des annotierten Objekts entspricht.

Somit kann in vorteilhafter Weise ein objektives Bewertungskriterium zum Bestimmen der Genauigkeit der visuellen Annotation vorgesehen werden.

Gemäß einem weiteren Aspekt der Erfindung umfasst das Verfahren darüber hinaus, dass bei Durchführen der zumindest einen visuellen Annotation und/oder der Zuweisung der zumindest einen Eigenschaft des Objekts und/oder der zumindest einen Eigenschaft des Sensors ein eine zum Berechnen des numerischen Werts der Annotation erforderliche Information, insbesondere zumindest einer automatisch durchgeführten Aktion, aufweisender Transaktionsdatensatz erstellt und in einem Transaktionsdatenspeicher abgespeichert wird.

In dem Transaktionsdatensatz wird somit in vorteilhafter Weise jede einzelne durchgeführte Aktion gespeichert, d.h. es wird gespeichert, ob es sich um eine visuelle und/oder begriffliche Annotation handelt und ob die begriffliche Annotation das Zuweisen von Objekteigenschaften und/oder Sensoreigenschaften enthält.

Erfindungsgemäß umfasst das Verfahren ferner, dass eine durch den Benutzer an der Annotation des Objekts durchgeführte Änderung, insbesondere eine Änderung der visuellen Annotation und/oder eine Änderung der zumindest einen Eigenschaft des Objekts, in den Transaktionsdatensatz des Objekts oder in einen mit dem Transaktionsdatensatz des Objekts verknüpften Transaktionsdatensatz aufgenommen und in dem Transaktionsdatenspeicher abgespeichert wird.

Somit kann zusätzlich zu den durch das computerimplementierte Verfahren automatisch durchgeführten Annotationsschritten in dem Transaktionsdatensatz ebenfalls festgehalten werden, ob und in welchem Umfang Änderungen an der Annotierung des betreffenden Objekts durchgeführt wurden. Ein solcher Transaktionsdatensatz bildet sodann die Grundlage für die Bepreisung der durchgeführten Aktionen.

Gemäß einem weiteren Aspekt der Erfindung umfasst das Verfahren darüber hinaus, dass der numerische Wert der Annotation einen Preis der Annotation bildet, wobei jeder in dem Transaktionsdatensatz enthaltene, eine durchgeführte Aktion betreffende, Eintrag durch ein Bewertungsmodul unter Verwendung eines Bepreisungsplans bepreist wird. Somit kann in vorteilhafter Weise eine exakte Bepreisung der durchgeführten Aktionen erfolgen. Gemäß einem weiteren Aspekt der Erfindung umfasst das Verfahren ferner, dass das Bewertungsmodul aus dem numerischen Wert des zumindest einen Eintrags der zumindest einen, insbesondere automatisch durchgeführten, Annotation eine erste Summe bildet, und falls der Transaktionsdatensatz zumindest einen Eintrag einer durch den Benutzer durchgeführten Änderung aufweist, das Bewertungsmodul aus dem numerischen Wert des zumindest einen Eintrags der durch den Benutzer durchgeführten Änderung eine zweite Summe bildet, und wobei die zweite Summe von der ersten Summe zur Berechnung des numerischen Werts, insbesondere des Preises, der Annotation subtrahiert wird.

Das erfindungsgemäße Verfahren bepreist die durchgeführte Annotation des betreffenden Objekts somit in vorteilhafter Weise in Abhängigkeit der spezifizierten technischen Parameter, nämlich der Genauigkeit der visuellen Annotation und der korrekten Zuweisung der begrifflichen Annotation und ermöglicht eine hierzu korrespondierende, erfolgsbezogene Abrechnung der erbrachten Leistungen.

Die hierin beschriebenen Merkmale des Verfahrens sind ebenfalls auf andere Szenarien als Computer-Vision-Modelle wie beispielsweise eine Personenerkennung in verschiedenen Umgebungen anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines Verfahrens zum Zuordnen eines numerischen Werts zu einer Annotation zumindest eines in Bild-, Video- und/oder Punktwolkendaten identifizierten Objekts gemäß einer bevorzugten Ausführungsform der Erfindung;
- Fig. 2: ein schematisches Diagramm einer durchgeführten Annotation von Objekten in Bild-, Video- und/oder Punktwolkendaten gemäß der bevorzugten Ausführungsform der Erfindung;
- Fig. 3: ein schematisches Diagramm einer durchgeführten Annotation von Objekten in Bild-, Video- und/oder Punktwolkendaten gemäß der bevorzugten Ausführungsform der Erfindung;
- Fig. 4: ein Blockdiagramm einer Mehrzahl von Objekteigenschaften gemäß der bevorzugten Ausführungsform der Erfindung;
- Fig. 5: ein Blockdiagramm einer Mehrzahl von Sensoreigenschaften gemäß der bevorzugten Ausführungsform der Erfindung; und
- Fig. 6: ein schematisches Diagramm eines Systems zum Zuordnen eines numerischen Werts zu einer Annotation zumindest eines in Bild-, Video- und/oder Punktwolkendaten identifizierten Objekts gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

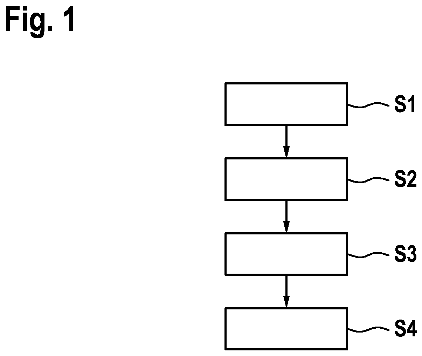

Fig. 1 zeigt ein Ablaufdiagramm eines Verfahrens zum Zuordnen eines numerischen Werts zu einer Annotation zumindest eines in Bild-, Video- und/oder Punktwolkendaten identifizierten Objekts gemäß einer bevorzugten Ausführungsform der Erfindung.

Das Verfahren umfasst ein Identifizieren S1 und Annotieren S2 des zumindest einen Objekts 14a, 14b in empfangenen Bild-, Video- und/oder Punktwolkendaten 12. Das Identifizieren S1 und/oder Annotieren S2 wird hierbei zumindest teilweise automatisch durchgeführt.

Alternativ hierzu besteht die Möglichkeit, dass das Identifizieren S1 und ein visuelles Annotieren 10a, S3 des zumindest einen Objekts 14a, 14b in den Bild-, Video- und/oder Punktwolkendaten manuell, d.h. durch einen Benutzer, durchgeführt wird.

Das Verfahren umfasst ferner ein Berechnen S3 des numerischen Werts der Annotation 10a, 10b des zumindest einen Objekts 14a, 14b. Der numerische Wert entspricht dabei dem für die Annotation 10a, 10b abzurechnenden Preis.

Der numerische Wert wird zumindest teilweise in Abhängigkeit eines Grads der Übereinstimmung einer Abmessung 34a, 34b einer visuellen Annotation 10a in Relation zu einer Abmessung 36a, 36b des zumindest einen Objekts 14a, 14b und/oder einer Übereinstimmung einer begrifflichen Kennzeichnung 10b des zumindest einen Objekts 14a, 14b mit dem zumindest einen Objekt 14a, 14b und/oder einer begrifflichen Kennzeichnung 10c eines das zumindest eine Objekt 14a, 14b erfassenden zumindest einen Sensors 16a, 16b mit dem zumindest einen Sensor 16a, 16b berechnet.

Der Grad der Übereinstimmung der Abmessung 34a, 34b der visuellen Annotation 10a in Relation zur Abmessung 36a, 36b des zumindest einen Objekts bedeutet, dass die visuelle Annotation, beispielsweise ein Begrenzungsrahmen, in Relation zum Objekt in seiner Dimension und Position korrekt bemessen wird.

Der Begrenzungsrahmen ist somit relativ zum Objekt weder zu klein noch zu groß und ist zudem korrekt zum Objekt positioniert und/oder ausgerichtet.

Die Übereinstimmung der begrifflichen Kennzeichnung 10b des zumindest einen Objekts 14a, 14b mit dem zumindest einen Objekt 14a, 14b bedeutet, dass der bildliche Inhalt mit dem begrifflichen Inhalt übereinstimmt, d.h. ein beispielsweise in den Bild-, Video- und/oder Punktwolkendaten erfasster PKW auch begrifflich korrekt als solcher bezeichnet wird.

Die Übereinstimmung der begrifflichen Kennzeichnung 10c des das zumindest eine Objekt 14a, 14b erfassenden zumindest einen Sensors 16a, 16b mit dem zumindest einen Sensor 16a, 16b bedeutet, dass der betreffende Sensor oder die betreffenden Sensoren, mit welchen die Bild-, Video- und/oder Punktwolkendaten gewonnen wurden, korrekt bezeichnet werden.

Wenn die Bild-, Video- und/oder Punktwolkendaten beispielsweise unter Verwendung einer vorne mittig angeordneten Weitwinkelkamera 32a und einer vorne links angeordneten Kamera 32c gewonnen wurden, sollten diese Kameras somit korrekt begrifflich bezeichnet bzw. den Bild-, Video- und/oder Punktwolkendaten korrekt zugewiesen werden.

Überdies umfasst das Verfahren ein Zuordnen S4 des berechneten numerischen Werts zu dem zumindest einen Objekt 14a, 14b.

Ferner ist vorgesehen, dass das Identifizieren S1 und das Annotieren S2 des zumindest einen Objekts automatisch, vorzugsweise unter Verwendung eines Algorithmus maschinellen Lernens wie beispielsweise einem künstlichen neuronalen Netzwerk, durchgeführt werden.

Das Annotieren S2 umfasst die visuelle Annotation 10a und das Zuweisen einer vorbestimmten Anzahl von Eigenschaften 10b1 zu dem zumindest einen Objekt 14a, 14b und/oder die Bezeichnung 10b2 zumindest eines die Bild-, Video- und/oder Punktwolkendaten 12 erfassenden Sensors 16a, 16b zu dem Objekt 14a, 14b.

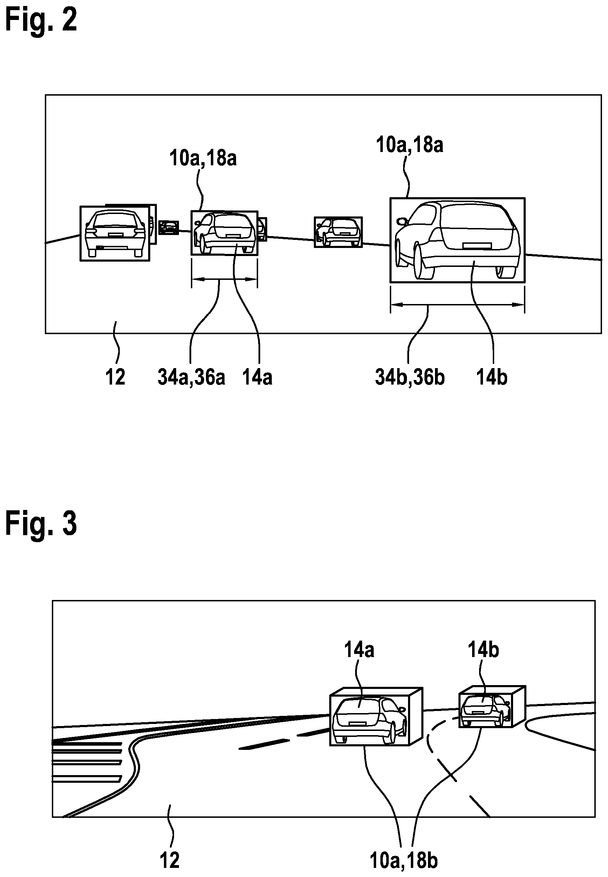

Fig. 2 zeigt ein schematisches Diagramm einer durchgeführten Annotation von Objekten in Bild-, Video- und/oder Punktwolkendaten gemäß der bevorzugten Ausführungsform der Erfindung.

Das visuelle Annotieren 10a umfasst ein automatisches Positionieren und Zeichnen eines das Objekt 14a, 14b umgebenden Begrenzungselements 18a. Das Begrenzungselement 18a ist in der vorliegenden Darstellung durch einen 2D-Begrenzungsrahmen 18a ausgebildet.

Die Genauigkeit der visuellen Annotation 10a wird durch einen Benutzer überprüft.

Die visuelle Annotation 10a wird hierbei als genau gewertet, falls die visuelle Annotation 10a benutzerdefinierte, dimensionsbezogene Anforderungen erfüllt, insbesondere falls eine Abmessung 34a, 34b des Begrenzungselements 18a, 18b im Wesentlichen einer Außenabmessung 36a, 36b des annotierten Objekts 14a, 14b entspricht.

Ziel der automatischen Positionierung und Zeichnung des entsprechenden Begrenzungsrahmens 18a um das betreffende Objekt 14a, 14b ist es, den Prozess der Annotation von Objekten 14a, 14b in Bild-, Video- und/oder Punktwolkendaten 12 vollständig zu automatisieren und so das Erfordernis der Nachbearbeitung durch den Benutzer zu eliminieren.

Damit kann eine präzise, effiziente und kostenreduzierte Annotation der in den Bild-, Video- und/oder Punktwolkendaten enthaltenen Objekte erreicht werden.

Fig. 3 zeigt ein schematisches Diagramm einer durchgeführten Annotation von Objekten in Bild-, Video- und/oder Punktwolkendaten gemäß der bevorzugten Ausführungsform der Erfindung.

Das visuelle Annotieren 10a umfasst ein automatisches Positionieren und Zeichnen eines das Objekt 14a, 14b umgebenden Begrenzungselements 18b.

Das Begrenzungselement 18b ist im vorliegenden Beispiel durch einen 3D-Begrenzungsrahmen 18b ausgebildet. Bei der vorliegenden Darstellung handelt es sich um Bild- und/oder Videodaten 12. 3D-Begrenzungsrahmen eignen sich darüber hinaus insbesondere bei LiDAR- und/oder Radarbilddaten d.h. bei Punktwolkendaten.

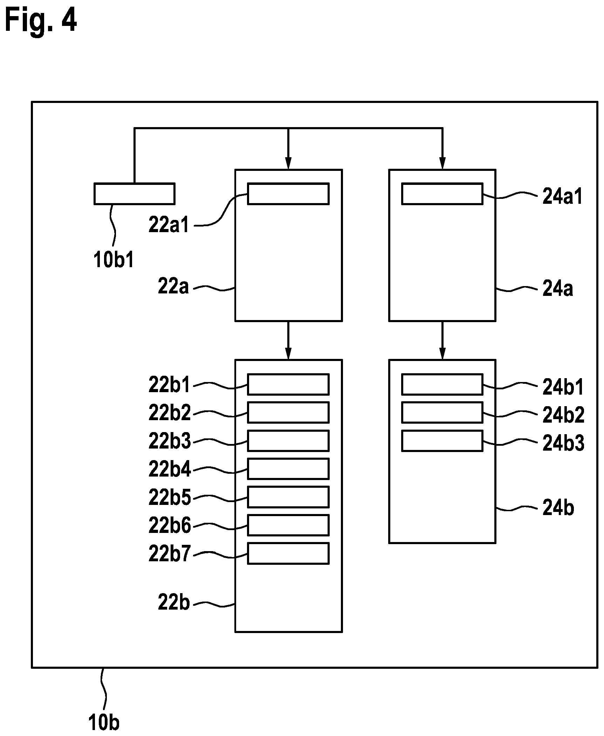

Fig. 4 zeigt ein Blockdiagramm einer Mehrzahl von Objekteigenschaften gemäß der bevorzugten Ausführungsform der Erfindung.

Die dem (in Fig. 4 nicht gezeigte) Objekt zugewiesene vorbestimmte Anzahl von Eigenschaften 10b1 weist zumindest eine Objektklasse auf.

Eine erste Objektklasse 22a weist Kraftfahrzeuge 22a1 auf. Eine erste Objektunterklasse 22b weist Personenkraftwagen 22b1, Lastkraftwagen 22b2, Lieferwagen 22b3, Busse 22b4, Baustellenfahrzeuge 22b5, Schienenfahrzeuge 22b6 und/oder Anhängevorrichtungen 22b7 auf.

Eine zweite Objektklasse 24a weist Personen 24a1 auf. Eine zweite Objektunterklasse 24b weist ein Geschlecht 24b1, eine Größe 24b2 und/oder ein Alter 24b3 der Person 24a1 auf. Die korrekte Zuweisung der zumindest einen Eigenschaft 10b1 zu dem Objekt wird hierbei durch einen Benutzer überprüft.

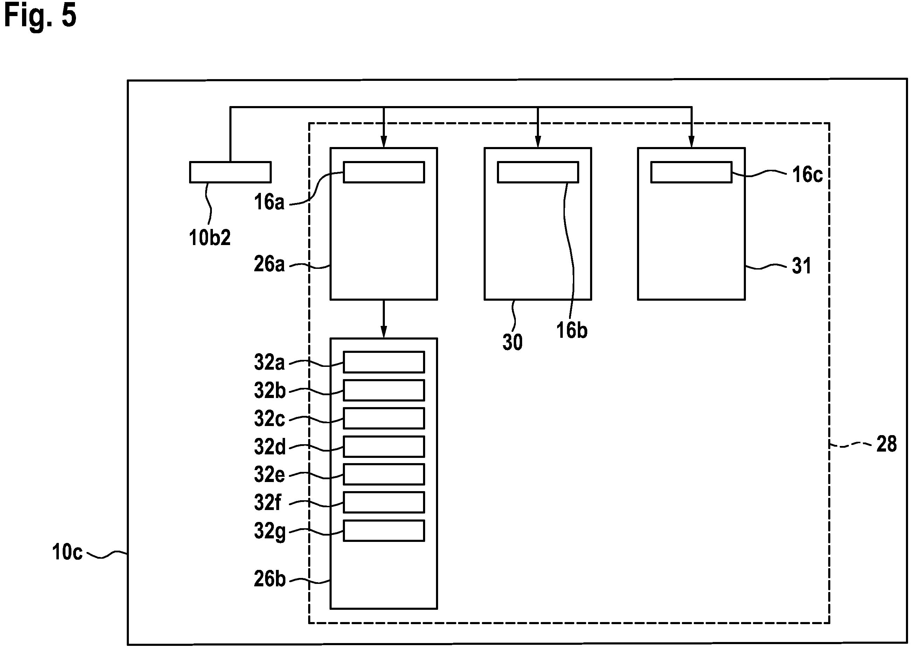

Fig. 5 zeigt ein Blockdiagramm einer Mehrzahl von Sensoreigenschaften gemäß der bevorzugten Ausführungsform der Erfindung.

Die begriffliche Kennzeichnung 10c betrifft den das zumindest eine Objekt erfassenden zumindest einen Sensor 16a, 16b.

Die dem die Bild-, Video- und/oder Punktwolkendaten 12 erfassenden Sensor 16a, 16b zugewiesene vorbestimmte Anzahl von Eigenschaften 10b2 weist zumindest eine Sensorklasse auf. Eine erste Sensorklasse 26a weist einen Bildsensor 16a auf.

Eine erste Sensorunterklasse 26b weist eine Position und Ausrichtung des Bildsensors 16a an einem Erfassungsfahrzeug 28 auf. Eine zweite Sensorklasse 30 weist einen LiDARsensor und eine dritte Sensorklasse 31 einen Radarsensor 16c auf.

Alternativ zu dem Erfassungsfahrzeug 28 kann der Sensor 16a, 16b beispielsweise an einer stationären Trägervorrichtung, beispielsweise an einem Gebäude und/oder einem Verkehrszeichen angeordnet sein.

Ferner alternativ kann der Sensor 16a, 16b beispielsweise an einem Schienenfahrzeug und/oder einem Luftfahrzeug angeordnet sein.

Bei Anordnung des Sensors 16a, 16b an einem Gebäude, beispielsweise in einem Parkhaus, können durch den Sensor parkende, einfahrende und/oder ausfahrende Kraftfahrzeuge erfasst werden.

Bei Anordnung des Sensors 16a, 16b an einem Verkehrszeichen, beispielsweise an einer Ampelanlage und/oder einer Anzeigetafel einer Verkehrsleitsystems können durch den Sensor passierende Kraftfahrzeuge erfasst werden.

Die erste Sensorunterklasse 26b weist eine am Erfassungsfahrzeug 28 vorne mittig angeordnete Weitwinkelkamera 32a, eine vorne mittig angeordnete Schmalwinkelkamera 32b, eine vorne links angeordnete Kamera 32c, eine vorne rechts angeordnete Kamera 32d, eine hinten links angeordnete Kamera 32e, eine hinten rechts angeordnete Kamera 32f und/oder eine hinten mittig angeordnete Weitwinkelkamera 32g auf.

Das erfindungsgemäße computerimplementierte Verfahren kann alternativ beispielsweise einen numerischen Wert zu einer Annotation zumindest eines in Audiodaten, insbesondere Sprachdaten, und/oder strukturierten Daten identifizierten Objekts zuordnen.

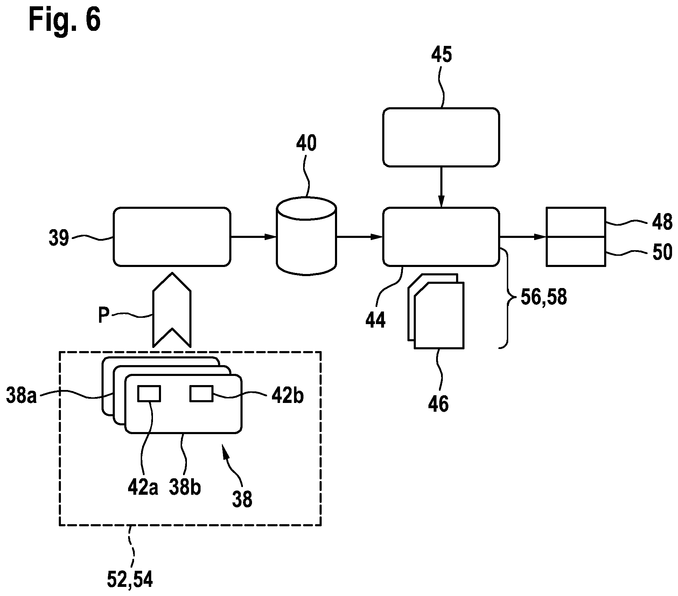

Fig. 6 zeigt ein schematisches Diagramm eines Systems zum Zuordnen eines numerischen Werts zu einer Annotation zumindest eines in Bild-, Video- und/oder Punktwolkendaten identifizierten Objekts gemäß der bevorzugten Ausführungsform der Erfindung.

Das System umfasst Mittel 52, 54 zum Identifizieren und Annotieren des zumindest einen Objekts 14a, 14b in empfangenen Bild-, Video- und/oder Punktwolkendaten 12, wobei das Identifizieren und/oder Annotieren zumindest teilweise automatisch durchführbar ist.

Das System umfasst ferner Mittel 56 zum Berechnen des numerischen Werts der Annotation 10a, 10b des zumindest einen Objekts 14a, 14b.

Der numerische Wert ist hierbei zumindest teilweise in Abhängigkeit eines Grads der Übereinstimmung einer Abmessung 34a, 34b einer visuellen Annotation 10a in Relation zu einer Abmessung 36a, 36b des zumindest einen Objekts 14a, 14b und/oder einer Übereinstimmung einer begrifflichen Kennzeichnung 10b des zumindest einen Objekts 14a, 14b mit dem zumindest einen Objekt 14a, 14b und/oder einer begrifflichen Kennzeichnung 10c eines das zumindest eine Objekt erfassenden zumindest einen Sensors 16a, 16b mit dem zumindest einen Sensor 16a, 16b berechenbar.

Das System umfasst überdies Mittel 58 zum Zuordnen S4 des berechneten numerischen Werts zu dem zumindest einen Objekt 14a, 14b.

Bei Durchführen der zumindest einen visuellen Annotation und/oder der Zuweisung der zumindest einen Eigenschaft des Objekts und/oder der Bezeichnung des zumindest einen die Bild-, Video- und/oder Punktwolkendaten erfassenden Sensors wird hierbei eine zum Berechnen des Preises der Annotation erforderliche Information, insbesondere zumindest einer automatisch durchgeführten Aktion, aufweisender Transaktionsdatensatz 38 erstellt und in einem Transaktionsdatenspeicher 40 abgespeichert.

Bei jeder neuen Annotierung eines Objekts wird hierbei ein entsprechender Transaktionsdatensatz 38a erstellt und durch eine Push-Nachricht P an ein Transaktionsgateway 39 gesendet, von welchem der Transaktionsdatensatz 38a an den Transaktionsdatenspeicher 40 weitergeleitet und in diesem abgespeichert wird.

Eine durch den Benutzer an der Annotation des Objekts durchgeführte Änderung 42a, 42b, insbesondere eine Änderung 42a der visuellen Annotation und/oder eine Änderung 42b der zumindest einen Eigenschaft des Objekts und/oder eine Eigenschaft des zumindest einen die Bild-, Video- und/oder Punktwolkendaten erfassenden Sensors wird hierbei in den Transaktionsdatensatz 38 des Objekts oder alternativ in einen mit dem Transaktionsdatensatz 38 des Objekts 14a, 14b verknüpften Transaktionsdatensatz 38 aufgenommen und in dem Transaktionsdatenspeicher 40 abgespeichert.

Jeder in dem Transaktionsdatensatz 38 enthaltene, eine durchgeführte Aktion betreffende Eintrag 38a, 38b wird durch ein Bewertungsmodul 44 unter Verwendung eines Bepreisungsplans 46 bepreist. Das Bewertungsmodul 44 bildet aus dem Preis des zumindest einen Eintrags 38a der zumindest einen automatisch durchgeführten Annotation eine erste Summe 48.

Falls der Transaktionsdatensatz 38 zumindest einen Eintrag 38b einer durch den Benutzer durchgeführten Änderung 42a, 42b aufweist, bildet das Bewertungsmodul 44 aus dem Preis des zumindest einen Eintrags 38b der durch den Benutzer durchgeführten Änderung 42a, 42b eine zweite Summe 50. Die zweite Summe 50 wird sodann von der ersten Summe 48 zur Preisberechnung der Annotation subtrahiert.

Der Eintrag 38a und der Eintrag 38b können alternativ in zwei voneinander getrennten Transaktionsdatensätzen 38 gespeichert sein, wobei die Transaktionsdatensätze 38 derart miteinander verknüpft sind, dass eine Preisberechnung der Annotation unter Verwendung der Einträge 38a, 38b beider Transaktionsdatensätze 38 möglich ist.

Für den Fall, dass es zu keiner Änderung an dem Transaktionsdatensatz kommt, ist die erste Summe 48 für die Preisbestimmung ausschlaggebend. Ein weiterer Einflussfaktor in die Bepreisung der durchgeführten Aktionen ist ein Abonnement-Modul 45, welches für den betreffenden Kunden hinterlegte Konditionen enthält, wie beispielsweise eine Rabattierung des Bepreisungsplans 46.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargelegten Ausführungsformen abzudecken.

## Patentansprüche

1. Computerimplementiertes Verfahren zum Zuordnen eines numerischen Werts zu einer Annotation (10a, 10b) zumindest eines in Bild-, Video- und/oder
Punktwolkendaten (12) identifizierten Objekts (14a, 14b), mit den Schritten:
Identifizieren (S1) und Annotieren (S2) des zumindest einen Objekts (14a, 14b) in empfangenen Bild-, Video- und/oder Punktwolkendaten (12), wobei das Identifizieren (S2) und Annotieren (S3) zumindest teilweise automatisch durchgeführt wird;
Berechnen (S3) des numerischen Werts der Annotation (10a, 10b) des zumindest einen Objekts (14a, 14b), wobei der numerische Wert zumindest teilweise in Abhängigkeit eines Grads einer Übereinstimmung einer Abmessung (34a, 34b) einer visuellen Annotation (10a) in Relation zu einer Abmessung (36a, 36b) des zumindest einen Objekts (14a, 14b) und/oder einer Übereinstimmung einer begrifflichen Kennzeichnung (10b) des zumindest einen Objekts (14a, 14b) mit dem zumindest einen Objekt (14a, 14b) berechnet wird, wobei die begriffliche Kennzeichnung (10b) des zumindest einen Objekts (14a, 14b) zumindest eine Eigenschaft (10b1) des Objekts (14a, 14b) umfasst, wobei der Grad der Übereinstimmung der Abmessung (34a, 34b) der visuellen Annotation (10a) in Relation zu der Abmessung (36a, 36b) des zumindest einen Objekts (14a, 14b) und/oder die Übereinstimmung der begrifflichen Kennzeichnung (10b) des zumindest einen Objekts (14a, 14b) mit dem zumindest einen Objekt (14a, 14b) durch einen Benutzer überprüft wird, und wobei eine durch den Benutzer an der Annotation (10a, 10b) des Objekts (14a, 14b) durchgeführte Änderung (42a, 42b) in den Transaktionsdatensatz (38) des Objekts (14a, 14b) oder in einen mit dem Transaktionsdatensatz (38) des Objekts (14a, 14b) verknüpften Transaktionsdatensatz (38) aufgenommen und in dem Transaktionsdatenspeicher (40) abgespeichert wird; und
Zuordnen (S4) des berechneten numerischen Werts zu dem zumindest einen Objekt (14a, 14b).

2. Computerimplementiertes Verfahren nach einem der vorhergehenden Ansprüche, **dadurch gekennzeichnet, dass** das visuelle Annotieren (10a) ein automatisches Positionieren und Zeichnen eines das Objekt (14a, 14b) umgebenden Begrenzungselements (18a, 18b) umfasst, welches durch einen 2D-Begrenzungsrahmen (18a) oder, insbesondere bei LiDAR- und/oder Radarbilddaten, durch einen 3D-Begrenzungsrahmen (18b) ausgebildet ist.

3. Computerimplementiertes Verfahren nach Anspruch 2 oder 3, **dadurch gekennzeichnet, dass** die dem Objekt (14a, 14b) zugewiesene zumindest eine Eigenschaft (10b1) zumindest eine Objektklasse aufweist, wobei eine erste Objektklasse (22a) Kraftfahrzeuge (22a1) und eine erste Objektunterklasse (22b) Personenkraftwagen (22b1), Lastkraftwagen (22b2), Lieferwagen (22b3), Busse (22b4), Baustellenfahrzeuge (22b5), Schienenfahrzeuge (22b6) und/oder Anhängevorrichtungen (22b7) aufweisen, und wobei eine zweite Objektklasse (24a) Personen (24a1) und eine zweite Objektunterklasse (24b) ein Geschlecht (24b1), eine Größe (24b2) und/oder ein Alter (24b3) der Person (24a1) aufweisen.

4. Computerimplementiertes Verfahren nach einem der vorhergehenden Ansprüche, **dadurch gekennzeichnet, dass** dem die Bild-, Video- und/oder Punktwolkendaten (12) erfassenden Sensor (16a, 16b) zumindest eine Eigenschaft (10b1) zugewiesen wird, wobei die zumindest eine Eigenschaft zumindest eine Sensorklasse aufweist, wobei eine erste Sensorklasse (26a) einen Bildsensor (16a) und eine erste Sensorunterklasse (26b) eine Position und Ausrichtung des Bildsensors (16a) an einer Trägervorrichtung, insbesondere an einem Erfassungsfahrzeug (28), aufweisen, und wobei eine zweite Sensorklasse (30) einen LiDARsensor (16b) und eine dritte Sensorklasse (31) einen Radarsensor (16c) aufweist.

5. Computerimplementiertes Verfahren nach Anspruch 4, **dadurch gekennzeichnet, dass** die erste Sensorunterklasse (26b) eine an der Trägervorrichtung, insbesondere am Erfassungsfahrzeug (28), vorne mittig angeordnete Weitwinkelkamera (32a), eine vorne mittig angeordnete Schmalwinkelkamera (32b), eine vorne links angeordnete Kamera (32c), eine vorne rechts angeordnete Kamera (32d), eine hinten links angeordnete Kamera (32e), eine hinten rechts angeordnete Kamera (32f) und/oder eine hinten mittig angeordnete Weitwinkelkamera (32g) aufweist.

6. Computerimplementiertes Verfahren nach einem der vorhergehenden Ansprüche, **dadurch gekennzeichnet, dass** das Identifizieren (S1) und das visuelle Annotieren (10a, S2) des zumindest einen Objekts (14a, 14b) in den Bild-, Video- und/oder Punktwolkendaten (12) manuell, insbesondere durch einen Benutzer, durchgeführt wird, und wobei das Zuweisen der zumindest einen Eigenschaft (10b1) des Objekts (14a, 14b) und/oder das Zuweisen der zumindest einen Eigenschaft (10b2) des das zumindest eine Objekt (14a, 14b) erfassenden zumindest einen Sensors (16a, 16b) automatisch durchgeführt wird.

7. Computerimplementiertes Verfahren nach Anspruch 1, **dadurch gekennzeichnet, dass** der Grad der Übereinstimmung der Abmessung (34a, 34b) der visuellen Annotation (10a) in Relation zu der Abmessung (36a, 36b) des zumindest einen Objekts (14a, 14b) als ausreichend bewertet wird, falls die Abmessung (34a, 34b) des Begrenzungselements (18a, 18b) im Wesentlichen der Abmessung (36a, 36b), insbesondere der Außenabmessung, des annotierten Objekts (14a, 14b) entspricht.

8. Computerimplementiertes Verfahren nach einem der vorhergehenden Ansprüche, **dadurch gekennzeichnet, dass** bei Durchführen der zumindest einen visuellen Annotation (10a) und/oder der Zuweisung der zumindest einen Eigenschaft (10b1) des Objekts (14a, 14b) und/oder der zumindest einen Eigenschaft (10b2) des Sensors (16a, 16b) ein eine zum Berechnen des numerischen Werts der Annotation (10a, 10b) erforderliche Information, insbesondere zumindest einer automatisch durchgeführten Aktion, aufweisender Transaktionsdatensatz (38) erstellt und in einem Transaktionsdatenspeicher (40) abgespeichert wird.

9. Computerimplementiertes Verfahren nach Anspruch 1 oder 8, **dadurch gekennzeichnet, dass** der numerische Wert der Annotation (10a, 10b) einen Preis der Annotation (10a, 10b) bildet, wobei jeder in dem Transaktionsdatensatz (38) enthaltene, eine durchgeführte Aktion betreffende, Eintrag (38a, 38b) durch ein Bewertungsmodul (44) unter Verwendung eines Bepreisungsplans (46) bepreist wird.

10. Computerimplementiertes Verfahren nach Anspruch 9, **dadurch gekennzeichnet, dass** das Bewertungsmodul (44) aus dem numerischen Wert des zumindest einen Eintrags (38a) der zumindest einen, insbesondere automatisch durchgeführten, Annotation (10a, 10b) eine erste Summe (48) bildet, und falls der Transaktionsdatensatz (38) zumindest einen Eintrag (38b) einer durch den Benutzer durchgeführten Änderung (42a, 42b) aufweist, das Bewertungsmodul (44) aus dem numerischen Wert des zumindest einen Eintrags (38b) der durch den Benutzer durchgeführten Änderung (42a, 42b) eine zweite Summe (50) bildet, und wobei die zweite Summe (50) von der ersten Summe (48) zur Berechnung des numerischen Werts, insbesondere des Preises, der Annotation (10a, 10b) subtrahiert wird.

11. System zum Zuordnen eines numerischen Werts zu einer Annotation (10a, 10b) zumindest eines in Bild-, Video- und/oder Punktwolkendaten (12) identifizierten Objekts (14a, 14b), mit:
Mitteln (52, 54) zum Identifizieren und Annotieren des zumindest einen Objekts (14a, 14b) in empfangenen Bild-, Video- und/oder Punktwolkendaten (12), wobei das Identifizieren und Annotieren zumindest teilweise automatisch durchführbar ist;
Mitteln (56) zum Berechnen (S3) des numerischen Werts der Annotation (10a, 10b) des zumindest einen Objekts (14a, 14b), wobei der numerische Wert zumindest teilweise in Abhängigkeit eines Grads der Übereinstimmung einer Abmessung (34a, 34b) einer visuellen Annotation (10a) in Relation zu einer Abmessung (36a, 36b) des zumindest einen Objekts (14a, 14b) und/oder einer Übereinstimmung einer begrifflichen Kennzeichnung (10b) des zumindest einen Objekts (14a, 14b) mit dem zumindest einen Objekt (14a, 14b) berechenbar ist, wobei der Grad der Übereinstimmung der Abmessung (34a, 34b) der visuellen Annotation (10a) in Relation zu der Abmessung (36a, 36b) des zumindest einen Objekts (14a, 14b) und/oder die Übereinstimmung der begrifflichen Kennzeichnung (10b) des zumindest einen Objekts (14a, 14b) mit dem zumindest einen Objekt (14a, 14b) durch einen Benutzer überprüfbar ist, und wobei eine durch den Benutzer an der Annotation (10a, 10b) des Objekts (14a, 14b) durchgeführte Änderung (42a, 42b) in den Transaktionsdatensatz (38) des Objekts (14a, 14b) oder in einen mit dem Transaktionsdatensatz (38) des Objekts (14a, 14b) verknüpften Transaktionsdatensatz (38) aufnehmbar und in dem Transaktionsdatenspeicher (40) abspeicherbar ist; und
Mitteln (58) zum Zuordnen (S4) des berechneten numerischen Werts zu dem zumindest einen Objekt (14a, 14b) .

12. Computerprogramm mit Programmcode, um das Verfahren nach einem der Ansprüche 1 bis 10 durchzuführen, wenn das Computerprogramm auf einem Computer ausgeführt wird.

## Claims

1. Computer-implemented method for assigning a numerical value to an annotation (10a, 10b) of at least one object (14a, 14b) identified in image, video and/or point cloud data (12), comprising the steps of:
Identifying (S1) and annotating (S2) the at least one object (14a, 14b) in received image, video and/or point cloud data (12), the identifying (S2) and annotating (S3) being performed at least partially automatically;
Calculating (S3) the numerical value of the annotation (10a, 10b) of the at least one object (14a, 14b), wherein the numerical value is calculated at least partly depending on a degree of a match of a dimension (34a, 34b) of a visual annotation (10a) in relation to a dimension (36a, 36b) of the at least one object (14a, 14b) and/or a correspondence of a conceptual label (10b) of the at least one object (14a, 14b) with the at least one object (14a, 14b), wherein the conceptual label (10b) of the at least one object (14a, 14b) comprises at least one property (10b1) of the object (14a, 14b), wherein the degree of correspondence of the dimension (34a, 34b) of the visual annotation (10a) in relation to the dimension (36a, 36b) of the at least one object (14a, 14b) and/or the correspondence of the conceptual labeling (10b) of the at least one object (14a, 14b) with the at least one object (14a, 14b) is checked by a user, and wherein a change (42a, 42b) to the annotation (10a, 10b) of the object (14a, 14b) by the user is recorded in the transaction data record (38) of the object (14a, 14b) or in a transaction data record (38) linked to the transaction data record (38) of the object (14a, 14b) and stored in the transaction data memory (40); and assigning (S4) the calculated numerical value to the at least one object (14a, 14b).

2. Computer-implemented method according to one of the preceding claims, **characterized in that** the visual annotation (10a) comprises automatically positioning and drawing a bounding element (18a, 18b) surrounding the object (14a, 14b), which is formed by a 2D bounding box (18a) or, in particular in the case of LiDAR and/or radar image data, by a 3D bounding box (18b).

3. Computer-implemented method according to claim 2 or 3, **characterized in that** the at least one property (10b1) assigned to the object (14a, 14b) has at least one object class, a first object class (22a) being motor vehicles (22a1) and a first object subclass (22b) being passenger cars (22b1), trucks (22b2), vans (22b3), buses (22b4), construction site vehicles (22b5), rail vehicles (22b6) and/or trailers (22b7), and wherein a second object class (24a) comprises persons (24a1) and a second object subclass (24b) comprises a gender (24b1), a height (24b2) and/or an age (24b3) of the person (24a1).

4. Computer-implemented method according to one of the preceding claims, **characterized in that** at least one property (10b1) is assigned to the sensor (16a, 16b) detecting the image, video and/or point cloud data (12), the at least one property having at least one sensor class, wherein a first sensor class (26a) comprises an image sensor (16a) and a first sensor subclass (26b) comprises a position and orientation of the image sensor (16a) on a carrier device, in particular on a detection vehicle (28), and wherein a second sensor class (30) comprises a LiDAR sensor (16b) and a third sensor class (31) comprises a radar sensor (16c).

5. Computer-implemented method according to claim 4, **characterized in that** the first sensor subclass (26b) has a wide-angle camera (32a) arranged centrally at the front on the carrier device, in particular on the detection vehicle (28), a narrow-angle camera (32b) arranged centrally at the front, a camera (32c) arranged at the front left, a camera (32d) arranged at the front right, a camera (32e) arranged at the rear left, a camera (32f) arranged at the rear right and/or a wide-angle camera (32g) arranged centrally at the rear.

6. Computer-implemented method according to one of the preceding claims, **characterized in that** the identification (S1) and the visual annotation (10a, S2) of the at least one object (14a, 14b) in the image, video and/or point cloud data (12) is performed manually, in particular by a user, and wherein the assignment of the at least one property (10b1) of the object (14a, 14b) and/or the assignment of the at least one property (10b2) of the at least one sensor (16a, 16b) detecting the at least one object (14a, 14b) is performed automatically.

7. Computer-implemented method according to claim 1, **characterized in that** the degree of correspondence of the dimension (34a, 34b) of the visual annotation (10a) in relation to the dimension (36a, 36b) of the at least one object (14a, 14b) is assessed as sufficient if the dimension (34a, 34b) of the boundary element (18a, 18b) essentially corresponds to the dimension (36a, 36b), in particular the external dimension, of the annotated object (14a, 14b).

8. Computer-implemented method according to one of the preceding claims, **characterized in that** when performing the at least one visual annotation (10a) and/or assigning the at least one property (10b1) of the object (14a, 14b) and/or the at least one property (10b2) of the sensor (16a, 16b), a transaction data record (38) comprising information required for calculating the numerical value of the annotation (10a, 10b), in particular at least one automatically performed action, is created and stored in a transaction data memory (40).

9. Computer-implemented method according to claim 1 or 8, **characterized in that** the numerical value of the annotation (10a, 10b) forms a price of the annotation (10a, 10b), each entry (38a, 38b) contained in the transaction data record (38) and relating to an action carried out being priced by a valuation module (44) using a pricing plan (46).

10. Computer-implemented method according to claim 9, **characterized in that** the valuation module (44) forms a first sum (48) from the numerical value of the at least one entry (38a) of the at least one annotation (10a, 10b), in particular an annotation performed automatically, and if the transaction data record (38) has at least one entry (38b) of a change (42a, 42b) made by the user, the evaluation module (44) forms a second sum (50) from the numerical value of the at least one entry (38b) of the change (42a, 42b) made by the user, and wherein the second sum (50) is subtracted from the first sum (48) to calculate the numerical value, in particular the price, of the annotation (10a, 10b).

11. System for assigning a numerical value to an annotation (10a, 10b) of at least one object (14a, 14b) identified in image, video and/or point cloud data (12), comprising: means (52, 54) for identifying and annotating the at least one object (14a, 14b) in received image, video and/or point cloud data (12), wherein the identification and annotation can be carried out at least partially automatically; means (56) for calculating (S3) the numerical value of the annotation (10a, 10b) of the at least one object (14a, 14b), wherein the numerical value can be at least partly calculated based on a degree of correspondence of a dimension (34a, 34b) of a visual annotation (10a) in relation to a dimension (36a, 36b) of the at least one object (14a, 14b) and/or a correspondence of a conceptual label (10b) of the at least one object (14a, 14b) with the at least one object (14a, 14b), wherein the degree of correspondence of the dimension (34a, 34b) of the visual annotation (10a) in relation to the dimension (36a, 36b) of the at least one object (14a, 14b) and/or the correspondence of the conceptual labeling (10b) of the at least one object (14a, 14b) with the at least one object (14a, 14b) can be checked by a user, and wherein a change (42a, 42b) to an annotation (10a, 10b) of the object (14a, 14b) made by the user can be recorded in the transaction data record (38) of the object (14a, 14b) or in a transaction data record (38) linked to the transaction data record (38) of the object (14a, 14b) and can be stored in the transaction data memory (40); and means (58) for assigning (S4) the calculated numerical value to the at least one object (14a, 14b).

12. Computer program comprising program code for performing the method according to any one of claims 1 to 10 when the computer program is executed on a computer.

## Revendications

1. Procédé mis en oeuvre par ordinateur pour associer une valeur numérique à une annotation (10a, 10b) d'au moins un objet (14a, 14b) identifié dans des données d'image, de vidéo et/ou de nuage de points (12), comprenant les étapes consistant à:
Identifier (S1) et annoter (S2) ledit au moins un objet (14a, 14b) dans des données d'image, de vidéo et/ou de nuage de points (12) reçues, l'identification (S2) et l'annotation (S3) étant effectuées au moins en partie automatiquement;
Calculer (S3) la valeur numérique de l'annotation (10a, 10b) du au moins un objet (14a, 14b), la valeur numérique étant calculée au moins partiellement en fonction d'un degré de correspondance d'une dimension (34a, 34b) d'une annotation visuelle (10a) par rapport à une dimension (36a, 36b) du au moins un objet (14a, 14b) et/ou une correspondance d'une étiquette conceptuelle (10b) du au moins un objet (14a, 14b) avec le au moins un objet (14a, 14b), l'étiquette conceptuelle (10b) du au moins un objet (14a, 14b) comprenant au moins une propriété (10b1) de l'objet (14a, 14b), le degré de correspondance de la dimension (34a, 34b) de l'annotation visuelle (10a) par rapport à la dimension (36a, 36b) de l'au moins un objet (14a, 14b) et/ou la correspondance de l'étiquette conceptuelle (10b) de l'au moins un objet (14a, 14b) avec l'au moins un objet (14a, 14b) est vérifiée par un utilisateur, et dans lequel une modification apportée par l'utilisateur à l'annotation (10a, 10b) de l'objet (14a, 14b) est enregistrée dans l'enregistrement de transaction (38) de l'objet (14a, 14b) ou dans un enregistrement de transaction (38) lié à l'enregistrement de transaction (38) de l'objet (14a, 14b) et est mémorisée dans la mémoire de données de transaction (40) ; et associer (S4) la valeur numérique calculée à l'au moins un objet (14a, 14b).

2. Procédé mis en œuvre par ordinateur selon l'une quelconque des revendications précédentes, **caractérisé en ce que** l'annotation visuelle (10a) comprend un positionnement et un dessin automatiques d'un élément de délimitation (18a, 18b) entourant l'objet (14a, 14b), qui est formé par un cadre de délimitation 2D (18a) ou, en particulier pour des données d'images LiDAR et/ou radar, par un cadre de délimitation 3D (18b).

3. Procédé mis en oeuvre par ordinateur selon la revendication 2 ou 3, **caractérisé en ce que** l'au moins une propriété (10b1) attribuée à l'objet (14a, 14b) présente au moins une classe d'objet, une première classe d'objet (22a) étant constituée par les véhicules automobiles (22a1) et une première sous-classe d'objet (22b) étant constituée par des voitures particulières (22b1), des camions (22b2), des voitures de livraison (22b3), des bus (22b4), des véhicules de chantier (22b5), des véhicules ferroviaires (22b6) et/ou des dispositifs de remorquage (22b7), et dans lequel une deuxième classe d'objets (24a) comprend des personnes (24a1) et une deuxième sous-classe d'objets (24b) comprend un sexe (24b1), une taille (24b2) et/ou un âge (24b3) de la personne (24a1).

4. Procédé mis en œuvre par ordinateur selon l'une des revendications précédentes, **caractérisé en ce qu'**au moins une propriété (10b1) est attribuée au capteur (16a, 16b) acquérant les données d'image, de vidéo et/ou de nuage de points (12), ladite au moins une propriété comprenant au moins une classe de capteur, une première classe de capteurs (26a) comprenant un capteur d'image (16a) et une première sous-classe de capteurs (26b) comprenant une position et une orientation du capteur d'image (16a) sur un dispositif de support, en particulier sur un véhicule de détection (28), et une deuxième classe de capteurs (30) comprenant un capteur LiDAR (16b) et une troisième classe de capteurs (31) comprenant un capteur radar (16c).

5. Procédé mis en œuvre par ordinateur selon la revendication 4, **caractérisé en ce que** la première sous-classe de capteurs (26b) comprend une caméra grand angle (32a) disposée à l'avant et au centre du dispositif de support, en particulier sur le véhicule de détection (28), une caméra petit angle (32b) disposée à l'avant et au centre, une caméra (32c) disposée à l'avant gauche, une caméra (32d) disposée à l'avant droit, une caméra (32e) disposée à l'arrière gauche, une caméra (32f) disposée à l'arrière droit et/ou une caméra grand angle (32g) disposée à l'arrière et au centre.

6. Procédé mis en œuvre par ordinateur selon l'une quelconque des revendications récédentes, **caractérisé en ce que** l'identification (S1) et l'annotation visuelle (10a, S2) dudit au moins un objet (14a, 14b) dans les données d'image, de vidéo et/ou de nuage de points (12) sont réalisées manuellement, notamment par un utilisateur, et dans lequel l'attribution de l'au moins une propriété (10b1) de l'objet (14a, 14b) et/ou l'attribution de l'au moins une propriété (10b2) de l'au moins un capteur (16a, 16b) détectant l'au moins un objet (14a, 14b) est effectuée automatiquement.

7. Procédé mis en œuvre par ordinateur selon la revendication 1, **caractérisé en ce que** le degré de correspondance de la dimension (34a, 34b) de l'annotation visuelle (10a) par rapport à la dimension (36a, 36b) dudit au moins un objet (14a, 14b) est jugé suffisant si la dimension (34a, 34b) de l'élément de délimitation (18a, 18b) correspond sensiblement à la dimension (36a, 36b), notamment extérieure, de l'objet annoté (14a, 14b).

8. Procédé mis en oeuvre par ordinateur selon l'une quelconque des revendications précédentes, **caractérisé en ce que**, lors de la réalisation de ladite au moins une annotation visuelle (10a) et/ou de l'attribution de ladite au moins une propriété (10b1) de l'objet (14a, 14b) et/ou de ladite au moins une propriété (10b2) du capteur (16a, 16b), un enregistrement de données de transaction (38) présentant une information nécessaire au calcul de la valeur numérique de l'annotation (10a, 10b), en particulier au moins une action exécutée automatiquement, est créé et stocké dans une mémoire de données de transaction (40).

9. Procédé mis en œuvre par ordinateur selon la revendication 1 ou 8, **caractérisé en ce que** la valeur numérique de l'annotation (10a, 10b) constitue un prix de l'annotation (10a, 10b), chaque entrée (38a, 38b) relative à une action effectuée et contenue dans l'enregistrement de transaction (38) étant tarifée par un module d'évaluation (44) en utilisant un plan de tarification (46).

10. Procédé mis en oeuvre par ordinateur selon la revendication 9, **caractérisé en ce que** le module d'évaluation (44) forme une première somme (48) à partir de la valeur numérique de l'au moins une entrée (38a) de l'au moins une annotation (10a, 10b), en particulier réalisée automatiquement, et si l'enregistrement de transaction (38) comporte au moins une entrée (38b) d'une modification (42a, 42b), le module d'évaluation (44) forme une deuxième somme (50) à partir de la valeur numérique de l'au moins une entrée (38b) de la modification (42a, 42b) effectuée par l'utilisateur, et la deuxième somme (50) étant soustraite de la première somme (48) pour calculer la valeur numérique, en particulier le prix, de l'annotation (10a, 10b).

11. Système pour associer une valeur numérique à une annotation (10a, 10b) d'au moins un objet (14a, 14b) identifié dans des données d'image, de vidéo et/ou de nuage de points (12), comprenant : des moyens (52, 54) pour identifier et annoter le au moins un objet (14a, 14b) dans des données d'image, de vidéo et/ou de nuage de points (12) reçues, l'identification et l'annotation pouvant être effectuées au moins en partie automatiquement ; des moyens (56) pour calculer (S3) la valeur numérique de l'annotation (10a, 10b) de l'au moins un objet (14a, 14b), la valeur numérique étant calculée au moins en partie en fonction d'un degré de correspondance d'une dimension (34a, 34b) d'une annotation visuelle (10a) par rapport à une dimension (36a, 36b) du au moins un objet (14a, 14b) et/ou d'une correspondance d'une étiquette conceptuelle (10b) du au moins un objet (14a, 14b) avec le au moins un objet (14a, 14b), le degré de correspondance de la dimension (34a, 34b) de l'annotation visuelle (10a) par rapport à la dimension (36a, 36b) de l'au moins un objet (14a, 14b) et/ou la correspondance de l'étiquette conceptuelle (10b) de l'au moins un objet (14a, 14b) avec l'au moins un objet (14a, 14b) peut être vérifiée par un utilisateur, et dans lequel une modification apportée par l'utilisateur à l'annotation (10a, 10b) de l'objet (14a, 14b) peut être enregistrée dans l'enregistrement de transaction (38) de l'objet (14a, 14b) ou dans un enregistrement de transaction (38) lié à l'enregistrement de transaction (38) de l'objet (14a, 14b) et peut être mémorisée dans la mémoire de données de transaction (40) ; et des moyens (58) pour associer (S4) la valeur numérique calculée à l'au moins un objet (14a, 14b).

12. Programme d'ordinateur comprenant un code de programme pour mettre en œuvre le procédé selon l'une quelconque des revendications 1 à 10, lorsque le programme d'ordinateur est exécuté sur un ordinateur.
